# EUROPEAN PATENT APPLICATION

(11) **EP 1 085 662 A2**
(43) Date of publication of application: **21.03.2001**
(21) Application number: 00119936.3
(22) Date of filing: 13.09.2000
(51) Int. Cl.: H04B 1/04, H04B 1/40

(54) **Multi-carrier transmitter, radio base station equipment and radio communication system used thereof**

(30) Priority: 14.09.1999 JP 26024299
(71) Applicant: MATSUSHITA ELECTRIC INDUSTRIAL CO., LTD., Kadoma-shi, Osaka (JP)
(72) Inventor: Kosaka, Hirofumi, Kanazawa-shi, Ishikawa (JP); Ikeda, Kazuhiko, Mattou-shi, Ishikawa (JP); Tateno, Yoshihide, Takaoka-shi, Toyama (JP); Matsubara, Naoki, Tokyo (JP)
(74) Representative: Grünecker, Kinkeldey, Stockmair & Schwanhäusser Anwaltssozietät

(57) **Abstract**

There are provided a plurality of transmitter circuits 1-1 to 1-n for generating carriers, a synthesizer 3 for synthesizing a plurality of carriers supplied from the plurality of transmitter circuits, a common amplifier 4 for amplifying commonly an output of the synthesizer 3, a directional coupler 10 for picking up a part of an output of the common amplifier 4, a plurality of bandpass filters 15-1 to 15-n for bandwidth-limiting an output of the directional coupler 10 every carrier, and
a plurality of detecting means 16-1 to 16-n for detecting a level of the carrier respectively.

## Description

### BACKGROUND OF THE INVENTION

### 1.Field of the Invention

The present invention relates to a multi-carrier transmitting system for transmitting/outputting a multi- carrier by synthesizing a plurality of carriers.

### 2.Description of the Related Art

In the prior art, in such multi-carrier transmitting system, in order to improve the precision of output level of the multi-carrier, either a transmitting level detecting circuit is provided to each transmitter circuit, i.e., every carrier or a method of detecting a transmission output, as shown in Patent Application Publication (KOKAI) Hei 7-283743, is employed.

According to such method, a transmitting/receiving level of a communication device, etc. are controlled by using this value of the detected output digitized by virtue of an A/D converter.

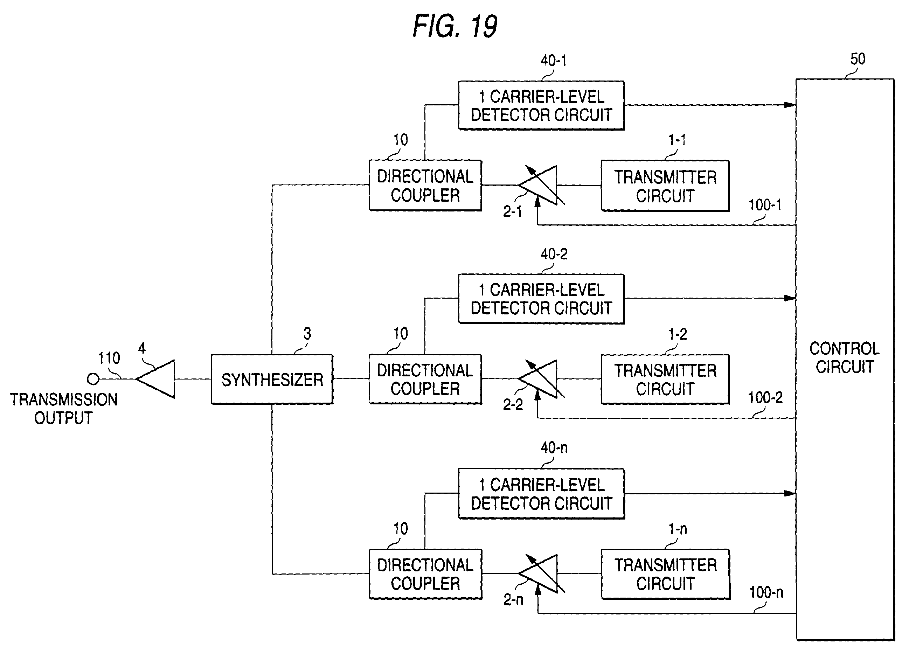

FIG.19 is a block diagram showing a schematic configuration of a multi-carrier transmitting system in the prior art.

The multi-carrier transmitting system shown in FIG.19 is constructed such that feedback control can be executed by transmitting carriers from a plurality of transmitter circuits 1-1 to 1-n to the variable gain amplifiers 2-1 to 2-n to gain-control the carriers by the variable gain amplifiers 2-1 to 2-n, then picking up a part of carrier powers from gain-controlled carriers by directional couplers 10 respectively, then detecting detected outputs from outputs of the directional couplers 10 by 1 carrier level detector circuits 40-1 to 40-n in response to power level to input into a control circuit 50, and then outputting gain control signals 100-1 to 100-n from the control circuit 50 to the variable gain amplifiers 2-1 to 2-n to maintain output levels of the variable gain amplifiers 2-1 to 2-n, whereby the output levels of the variable gain amplifiers 2-1 to 2-n are kept constant. Then, a synthesizer 3 synthesizes outputs of the variable gain amplifiers 2-1 to 2-n to output it to a common amplifier 4, and then an output of the common amplifier 4 is transmitted.

According to such multi-carrier transmitting system in the prior art, level detection, level control, etc. of the multi-carrier are executed at output ends of the transmitter circuits 1-1 to 1-n respectively. Thus, since gains from output ends of the directional couplers 10 to the output end of the common amplifier 4 for respective transmitter circuits 1-1 to 1-n are kept constant under any environmental conditions, a transmission power level of the multi-carrier transmitting system is kept constant.

However, according to the above multi-carrier transmitting system in the prior art, actually the gains from output ends of the directional couplers 10 to the output end of the common amplifier 4 for respective transmitter circuits 1-1 to 1-n are varied by about 1 dB due to the influences of fluctuation in passing loss, fluctuation in the gain, temperature characteristics, etc. of constituent parts and thus cannot be kept constant. Therefore, there is such a problem that the predetermined transmitting power level cannot be obtained with high precision at the final transmitting output end, i.e., the output stage of the common amplifier 4.

Also, in the multi-carrier transmitting system of the CDMA system in which the transmitting power must be controlled every carrier, etc., there is such a problem that, since the output levels of respective carriers are different, an error is caused in detecting the level even if the output level of the multi-carrier which is subjected to the synthesis is detected at a time.

### SUMMARY OF THE INVENTION

The present invention has been made in view of the above problems, and it is an object of the present invention to provide a multi-carrier transmitting system which includes a circuit for detecting an output level of a multi-carrier with good precision and can achieve high output precision, a radio base station equipment and a radio communication system using the multi-carrier transmitting system.

In order to achieve the above object, a multi-carrier transmitting system according to the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of bandpass filters for limiting a bandwidth of an output of the coupler every carrier, and a plurality of detecting means for detecting a level of the carrier respectively.

Therefore, according to the multi-carrier transmitting system of the present invention, output levels are detected every carrier based on the multi-carrier as the output of the common amplifier. Therefore, even when variation of constituent parts, etc. occurs due to the environmental change, the output level can be kept constant, and thus a predetermined transmitting power level can be obtained at the final output end.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of bandpass filters for limiting a bandwidth of an output of the coupler every carrier, and a plurality of detecting means for detecting a level of the carrier respectively.

The multi-carrier is formed by synthesizing a plurality of carriers which are generated by a plurality of transmitter circuits and have different frequencies.

The synthesizer synthesizes a plurality of carriers, and a Wilkinson synthesizer, etc., for example, may be utilized.

The common amplifier amplifies all carriers commonly, and a power amplifier for amplifying power levels of carriers, etc., for example, may be utilized.

The coupler corresponds to a coupler for picking up a part of the transmitting output, and a capacitor, a resistor, and a directional coupler may be utilized.

The bandpass filter corresponds to a bandpass filter for extracting only a necessary frequency bandwidth and attenuating largely other frequency bandwidths, and a dielectric filter, a laminated filter, etc., for example, may be utilized.

The detecting means corresponds to a detector for outputting a DC voltage or current in answer to the signal power input, and a diode detector, etc., for example, may be utilized.

Therefore, according to the multi-carrier transmitting system in the present invention, output levels are detected every carrier based on the multi-carrier as the output of the common amplifier. Therefore, even if variation of constituent parts, etc. occurs due to the environmental change, the output level can be kept constant, and as a result a predetermined transmitting power level can be obtained at the final output end.

Speaking more precisely, the bandwidth of the multi- carrier is limited carrier by carrier by the bandpass filters 15-1 to 15-n provided for respective carriers, and then the output levels are detected by the detecting means 16-1 to 16-n every carrier. Therefore, detection precision of the output levels is good and in turn the transmission power level with high precision can be obtained at the final output end.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of frequency mixers for converting an output of the coupler into intermediate frequencies, a plurality of local oscillators for generating local oscillation frequencies to be input into the frequency mixers, a plurality of IF stage bandpass filters for bandwidth- limiting the intermediate frequencies supplied from the frequency mixers every carrier, and a plurality of detecting means for detecting levels of the intermediate frequencies which are bandwidth-limited by the IF stage bandpass filters.

The frequency mixer corresponds to a frequency mixer which mixes a radio frequency and a local oscillation frequency and picks up a different frequency component as an intermediate frequency.

The local oscillator corresponds to an oscillator for generating continuously electric vibrations having a constant amplitude and a constant frequency, and a frequency synthesizer circuit, etc., for example, may be utilized.

The IF stage bandpass filter corresponds to a bandpass filter for extracting only a necessary frequency bandwidth and attenuating largely other frequency bandwidths, and an SAW (Surface Acoustic Wave) filter, etc., for example, may be utilized.

Therefore, according to the multi-carrier transmitting system in the present invention, since output levels of respective carriers are detected based on the multi-carrier as the output of the common amplifier, a predetermined transmitting power level can be derived at the final output end by holding the output levels constant even when variation in the constituent parts, etc. is caused due to the environmental changes.

Speaking more precisely, the bandwidths of the intermediate frequencies are limited sharply by converting the output of the coupler from the radio frequency into the intermediate frequency, and also by using the SAW filters, etc. as the IF stage bandpass filters. Therefore, since signal-to-noise ratios of the carriers can be increased after the carriers are passed through the IF stage bandpass filters, transmitting power levels of the multi-carrier can be detected with high precision by the detecting means every carrier.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a frequency mixer for converting an output of the coupler into an intermediate frequency, a local oscillator for generating one local oscillation frequency, a plurality of IF stage bandpass filters for bandwidth-limiting the intermediate frequency supplied from the frequency mixer every carrier, and a plurality of detecting means for detecting a level of the intermediate frequency every carrier.

Therefore, according to the multi-carrier transmitting system in the present invention, since output levels of respective carriers are detected based on the multi-carrier as the output of the common amplifier, a predetermined transmitting power level can be derived at the final output end by holding the output levels constant even when variation in the constituent parts, etc. is caused due to the environmental changes.

Speaking more precisely, after the multi-carrier is converted by the frequency mixer from the radio frequency into the intermediate frequency, an error in level detection can be reduced since the level is detected after the bandwidths of the intermediate frequencies are limited sharply by the SAW filters, etc. used as the IF stage bandpass filters. In addition, only one local oscillator is needed regardless of the number of carriers, and the number of constituent parts can be reduced.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a frequency mixer for converting an output of the coupler into an intermediate frequency, a local oscillator for switching a local oscillation frequency such that respective carriers of a multi-carrier can be converted into the intermediate frequency by the frequency mixer, an IF stage bandpass filter for bandwidth-limiting the intermediate frequency supplied from the frequency mixer every carrier, and a detecting means for detecting a level of the intermediate frequency whose bandwidth is limited.

The local oscillator switches the local oscillation frequency selectively every carrier, and the frequency synthesizer circuit, etc. may be utilized.

Therefore, according to the multi-carrier transmitting system in the present invention, the output level of each carrier is detected based on the multi-carrier as the output of the common amplifier. Therefore, a predetermined transmitting power level can be derived at the final output end by holding the output level constant even when variation in the constituent parts, etc. is caused due to the environmental changes.

Also, since the local oscillation frequency of each multi-carrier is switched, the intermediate frequency can be set to the same frequency after the carrier is passed through the frequency mixer. In addition, since merely the IF stage bandpass filter that limits the bandwidth of the intermediate frequency and the detecting means that outputs the detected output in response to the transmitting power level for one carrier may be equipped, the number of the constituting parts can be reduced.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of frequency mixers for converting an output of the coupler into intermediate frequencies, a plurality of local oscillators for switching a local oscillation frequency to be input into the frequency mixers, a plurality of IF stage bandpass filters for bandwidth- limiting the intermediate frequencies supplied from the frequency mixers every carrier, and a plurality of detecting means for detecting levels of the intermediate frequencies which are bandwidth- limited by the IF stage bandpass filters.

Therefore, according to the multi-carrier transmitting system in present invention, the output levels of respective carriers are detected based on the multi-carrier as the output of the common amplifier. Therefore, a predetermined transmitting power level can be derived at the final output end by holding the output level constant even when variation in the constituent parts, etc. is caused due to the environmental changes.

In addition, the local oscillator is divided in plural every frequency band of the multi-carrier, and thus the error of the transmitting power per multi-carrier can be reduced even if the number of carriers is increased.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of bandpass filters for bandwidth-limiting an output of the coupler every carrier, a high frequency switch for switching outputs of the bandpass filters selectively, and a detecting means for detecting a level of the carrier which is selected selectively by the high frequency switch.

Therefore, according to the multi-carrier transmitting system in the present invention, the output level of each carrier is detected based on the multi-carrier as the output of the common amplifier. Therefore, a predetermined transmitting power level can be derived at the final output end by holding the output level constant even when variation in the constituent parts, etc. is caused due to the environmental changes.

In addition, since the high frequency switch is arranged at the preceding stage of the detecting means, the detecting means can be used commonly, and in turn the number of parts can be reduced.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of frequency mixers for converting an output of the coupler into intermediate frequencies every carrier, a plurality of local oscillators for generating local oscillation frequencies to be input into the frequency mixers, a high frequency switch for switching outputs of the frequency mixers selectively, an IF stage bandpass filter for bandwidth-limiting the intermediate frequency of each carrier which is selectively switched by the high frequency switch, and a detecting means for detecting a level of the carrier which is bandwidth-limited by the IF stage bandpass filter.

Therefore, according to the multi-carrier transmitting system in the present invention, the output level of each carrier is detected based on the multi-carrier as the output of the common amplifier. Therefore, a predetermined transmitting power level can be derived at the final output end by holding the output level constant even when variation in the constituent parts, etc. is caused due to the environmental changes.

In addition, since normally merely one IF stage bandpass filter which needs a large part installing area is equipped, as a result the part installing area can be suppressed to the lowest minimum.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of frequency mixers for converting an output of the coupler into intermediate frequencies, a plurality of local oscillators for generating local oscillation frequencies to be input into the frequency mixers, a plurality of IF stage bandpass filters for bandwidth- limiting the intermediate frequencies supplied from the frequency mixers every carrier, a high frequency switch for switching selectively the intermediate frequencies of respective carriers which are bandwidth-limited by the IF stage bandpass filters, and a detecting means for detecting a level of the carrier which is switched selectively by the high frequency switch.

Therefore, according to the multi-carrier transmitting system in the present invention, the output level of each carrier is detected based on the multi-carrier as the output of the common amplifier. Therefore, a predetermined transmitting power level can be derived at the final output end by holding the output level constant even when variation in the constituent parts, etc. is caused due to the environmental changes.

In addition, after the outputs of the frequency mixers are bandwidth-limited by the IF stage bandpass filters every carrier, they are switched selectively by the high frequency switch. Therefore, the output is never affected by distortion due to the spurious input other than the desired wave for the high frequency switch.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a frequency mixer for converting an output of the coupler into an intermediate frequency, a local oscillator for generating one local oscillation frequency, a plurality of IF stage bandpass filters for bandwidth-limiting the intermediate frequency every carrier, a high frequency switch for switching selectively intermediate frequencies of respective carriers which are bandwidth-limited by the IF stage bandpass filters, and a detecting means for detecting a level of the intermediate frequency of the carrier which is switched selectively by the high frequency switch.

Therefore, according to the multi-carrier transmitting system in the present invention, the output level of each carrier is detected based on the multi-carrier as the output of the common amplifier. Therefore, a predetermined transmitting power level can be derived at the final output end by holding the output level constant even when variation in the constituent parts, etc. is caused due to the environmental changes.

In addition, since the high frequency switch is arranged at the preceding stage of the detecting means, such detecting means can be used commonly, and in turn the number of parts can be reduced.

A multi-carrier transmitting system in the present invention comprises a plurality of transmitter circuits for generating carriers, a synthesizer for synthesizing a plurality of carriers supplied from the plurality of transmitter circuits, a common amplifier for amplifying commonly an output of the synthesizer, a coupler for picking up a part of an output of the common amplifier, a plurality of frequency mixers for converting an output of the coupler into intermediate frequencies, a plurality of local oscillators for switching local oscillation frequencies that enable the frequency mixers to convert carriers of a multi-carrier into the intermediate frequencies, a plurality of IF stage bandpass filters for bandwidth-limiting the intermediate frequencies supplied from the frequency mixers every carrier, a high frequency switch for switching selectively intermediate frequencies which are bandwidth-limited by the IF stage bandpass filters, and a detecting means for detecting a level of the intermediate frequency of the carrier which is switched selectively by the high frequency switch.

Therefore, according to the multi-carrier transmitting system in the present invention, the output level of each carrier is detected based on the multi-carrier as the output of the common amplifier. Therefore, a predetermined transmitting power level can be derived at the final output end by holding the output level constant even when variation in the constituent parts, etc. is caused due to the environmental changes.

In addition, since the high frequency switch is arranged at the preceding stage of the detecting means, such detecting means can be used commonly, and in turn the number of parts can be reduced.

Also, in a multi-carrier transmitting system in the present invention, in addition to the configuration according to claim 1, 2 or 5, an analog switch for switching selectively levels detected by the detecting means is arranged at an output stage of the detecting means.

Therefore, according to the multi-carrier transmitting system in the present invention, since the analog switch is provided to the output stage of the detecting means, the transmitting power level of the multi-carrier can be detected every carrier without the influence of the variation in the insertion loss of the analog switch, and the transmitting power level of the multi-carrier can be detected with high precision.

Also, a multi-carrier transmitting system in the present invention, in addition to said foregoing configurations, further comprises variable gain amplifiers arranged between the transmitter circuits and the synthesizer to gain-control carriers from the transmitter circuits, and a control circuit for controlling gains of the variable gain amplifiers based on an output level detected by the detecting means.

Therefore, according to the multi-carrier transmitting system in the present invention, since the gain of the variable gain amplifier is controlled based on the output level detected by the detecting means, the error of the transmitting power every carrier in the output of the multi-carrier transmitting system can be reduced.

Also, a multi-carrier transmitting system in the present invention, in addition to said foregoing configurations , further comprises a control circuit for presuming environmental conditions of carries in the multi-carrier except one carrier based on an output level of one carrier in the multi-carrier, that is detected by the detecting means.

Therefore, according to the multi-carrier transmitting system in the present invention, one carrier output level in the multi-carrier is detected as the transmitting power level of the multi-carrier, then environmental conditions in the system are presumed based on this output level, and then such environmental conditions are applied to other carriers in addition to this carrier. As a result, there is no need that portions for detecting output levels corresponding to the number of carriers should be provided, and in turn the number of the constituent parts can be reduced.

Also, a multi-carrier transmitting system in the present invention, in addition to said foregoing configuration , further comprises variable gain amplifiers arranged between the transmitter circuits and the synthesizer to gain-control carriers from the transmitter circuits, and a control circuit for controlling gains of the variable gain amplifiers for the carriers except one carrier based on an output level of one carrier in the multi-carrier, that is detected by the detecting means.

According to the multi-carrier transmitting system in the present invention, the output level of each carrier is detected based on the multi-carrier as the output of the common amplifier. Therefore, even when variation in the constituent parts, etc. is caused due to the environmental changes, a predetermined transmitting power level can be derived at the final output end by keeping the output level constant.

Also, a radio base station equipment in the present invention comprises the built-in multi- carrier transmitting system , and an antenna provided to transmit/output the output of the coupler in the multi-carrier transmitting system.

Also, according to the radio base station equipment in the present invention, an error of the transmitting power of each multi-carrier can be reduced in the output of the radio base station equipment.

Also, a radio communication system in the present invention comprises the radio base station equipment 15, and a radio mobile unit connected mutually to the radio base station equipment by using a radio wave having a same frequency.

According to the radio communication system in the present invention, an error of the transmitting power level of each multi-carrier can be reduced in the output of the multi-carrier transmitting system. That is, the transmitting power can be supplied with high precision to the radio mobile unit 80 which transmits/receives the multi-carrier to/from the radio base station equipment.

### BRIEF DESCRIPTION OF THE DRAWINGS

FIG.1 is ablock diagram showing a schematic configuration of a multi-carrier transmitting system according to a first embodiment of the present invention.
FIG.2 is a block diagram showing a schematic configuration of a multi-carrier transmitting system according to a second embodiment of the present invention.
FIG.3 is a block diagram showing a schematic configuration of a multi-carrier transmitting system according to a third embodiment of the present invention.
FIG.4 is a block diagram showing a schematic configuration of a multi-carrier transmitting system according to a fourth embodiment of the present invention.
FIG.5 is a block diagram showing a schematic configuration of a multi-carrier transmitting system according to a fifth embodiment of the present invention.
FIG.6 is a block diagram showing a schematic configuration of a multi-carrier transmitting system according to a sixth embodiment of the present invention.
FIG.7 is a block diagram showing a schematic configuration of a multi-carrier transmitting system according to a seventh embodiment of the present invention.
FIG.8 is a block diagram showing a schematic configuration of a multi-carrier transmitting system according to an eighth embodiment of the present invention.
FIG.9 is a block diagram showing a schematic configuration of a multi-carrier transmitting system according to a ninth embodiment of the present invention.
FIG.10 is a block diagram showing a schematic configuration of a multi-carrier transmitting system according to a tenth embodiment of the present invention.
FIG.11 is a block diagram showing a schematic configuration of a multi-carrier transmitting system according to an eleventh embodiment of the present invention.
FIG.12 is a block diagram showing a schematic configuration of a multi-carrier transmitting system according to a twelfth embodiment of the present invention.
FIG.13 is a block diagram showing a schematic configuration of a multi-carrier transmitting system according to a thirteenth embodiment of the present invention.
FIG.14 is a block diagram showing a schematic configuration of a multi-carrier transmitting system according to a fourteenth embodiment of the present invention.
FIG.15 is a block diagram showing a schematic configuration of a radio base station equipment employing a multi-carrier transmitting system according to a fifteenth embodiment of the present invention.
FIG.16 is a block diagram showing a schematic configuration of a radio communication system comprising a radio base station equipment employing a multi-carrier transmitting system according to a sixteenth embodiment of the present invention.
FIG.17 is a view showing a frequency spectrum of the multi-carrier.
FIG.18 is a views showing the frequency spectrum of each carrier in the multi-carrier respectively.
FIG.19 is a block diagram showing a schematic configuration of a multi-carrier transmitting system in the prior art.

### DESCRIPTION OF THE PREFERRED EMBODIMENTS

### (First Embodiment)

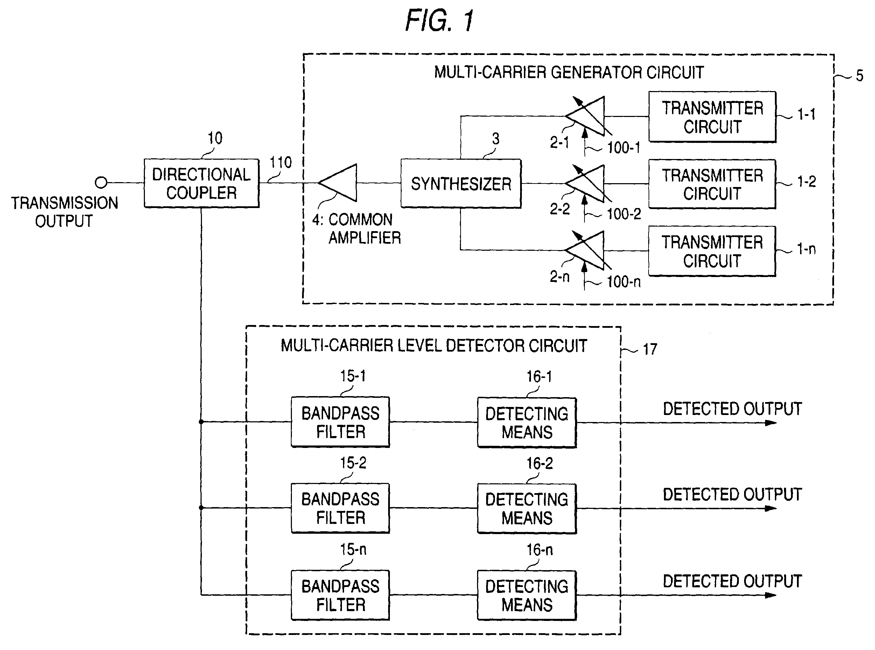

FIG.1 is a block diagram showing a schematic configuration of a multi-carrier transmitting system according to a first embodiment of the present invention.

The multi-carrier transmitting system shown in FIG.1 comprises transmitter circuits 1-1 to 1-n for outputting carriers; variable gain amplifiers 2-1 to 2-n for gain-controlling the carriers from the transmitter circuits 1-1 to 1-n in response to gain control signals 100-1 to 100-n; a synthesizer 3 for synthesizing outputs of the variable gain amplifiers 2-1 to 2-n; a common amplifier 4 for amplifying an output of the synthesizer 3 at a predetermined amplification factor; a directional coupler 10 for picking up a part of power of an output of the common amplifier 4, i.e., an output (multi-carrier) of a multi-carrier generator circuit 5; bandpass filters 15-1 to 15-n for restricting the bandwidth of an output of the directional coupler 10 every carrier; and detecting means 16-1 to 16-n for outputting detected outputs in response to power levels of the outputs of the bandpass filters 15-1 to 15-n every carrier.

The multi-carrier generator circuit 5 shown in FIG. 1 generates multi-carriers, and is constructed by the transmitter circuits 1-1 to 1-n, the variable gain amplifiers 2-1 to 2-n, the synthesizer 3, and the common amplifier 4.

In addition, a multi-carrier level detector circuit 17 detects an output level of the multi-carrier generated by the multi-carrier generator circuit 5, and is constructed by the bandpass filters 15-1 to 15-n and the detecting means 16-1 to 16-n.

Then, an operation of the multi-carrier transmitting system according to the first embodiment will be explained hereunder.

The transmitter circuits 1-1 to 1-n are transmitter circuits that output carriers having different frequencies respectively.

The variable gain amplifiers 2-1 to 2-n gain-control the carriers output from the transmitter circuits 1-1 to 1-n. Then, the synthesizer 3 synthesizes the gain- controlled carriers, and then the common amplifier 4 amplifies the synthesized carrier. Thus, a multi-carrier 110 is derived, and then the multi-carrier 110 is input into the directional coupler 10.

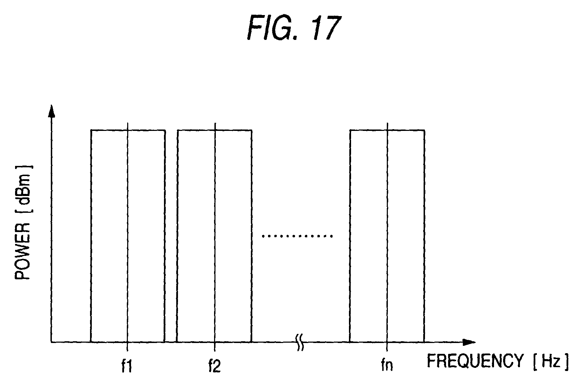

The directional coupler 10, that distributes the multi-carrier 110 into two ways, picks up a part of the power of the multi-carrier 110 to then input into the multi-carrier level detector circuit 17. FIG.17 is a view showing a frequency spectrum of the multi-carrier 110 as the output of the directional coupler 10.

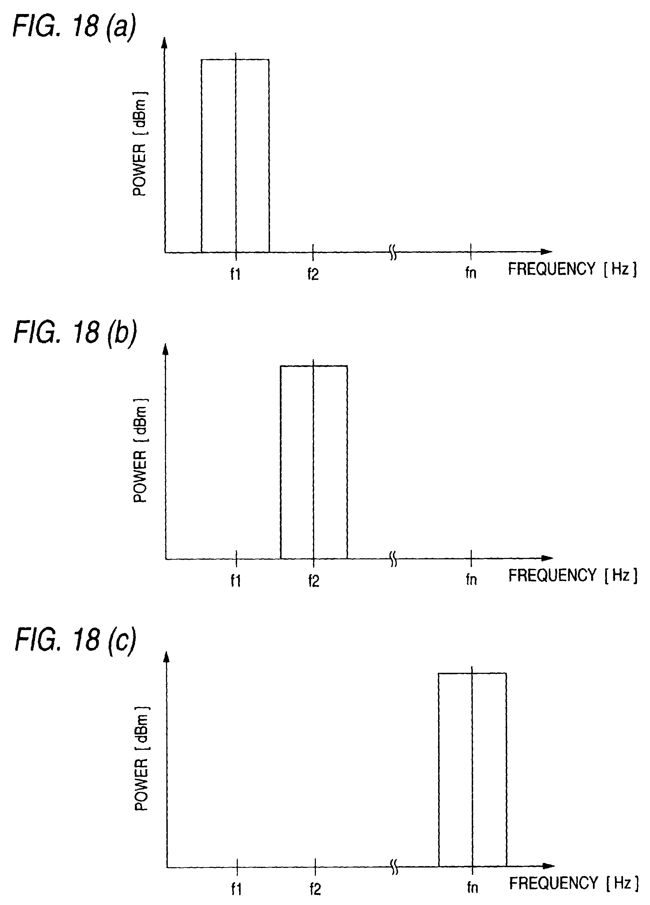

The bandpass filters 15-1 to 15-n in the multi-carrier level detector circuit 17 restrict the bandwidths of the output of the directional coupler 10 every carrier frequency. FIGS.18(a) to (c) are views showing bandpassed frequency spectrums of respective carriers after the output of the directional coupler 10 is passed through the bandpass filters 15-1 to 15-n respectively.

The bandpass filters 15-1 to 15-n cause the detecting means 16-1 to 16-n to output the detected outputs in response to power level of every carrier.

According to the first embodiment, output levels are detected every carrier by the multi-carrier level detector circuit 17 based on the multi-carrier as the output of the common amplifier 4. Therefore, even if variation of constituent parts, etc. occurs due to the environmental change, the output level can be kept constant, and as a result a predetermined transmitting power level can be obtained at the final output end.

Speaking more precisely, the bandwidth of the multi- carrier is limited carrier by carrier by the bandpass filters 15-1 to 15-n provided for respective carriers, and then the output levels are detected by the detecting means 16-1 to 16-n every carrier. Therefore, detection precision of the output levels is good and in turn the transmission power level with high precision can be obtained at the final output end.

### (Second Embodiment)

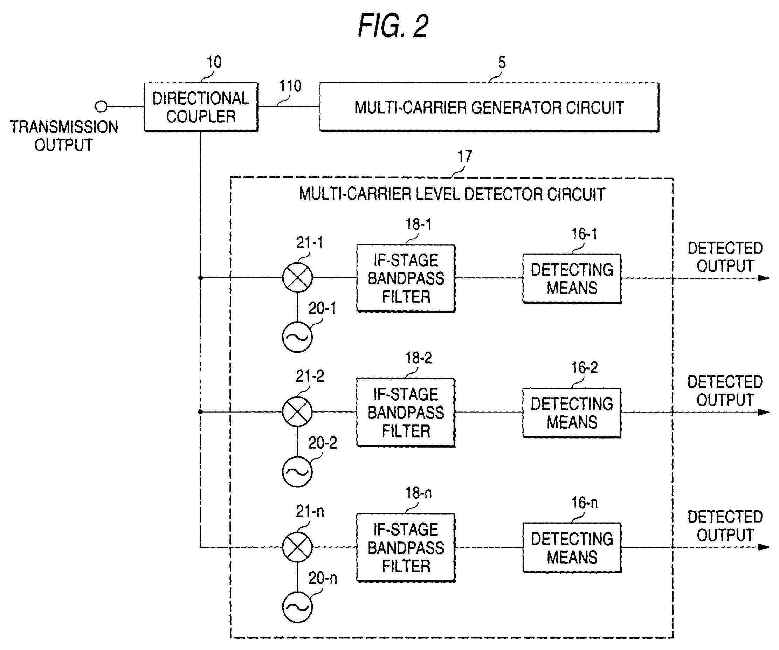

FIG.2 is a block diagram showing a schematic configuration of a multi-carrier transmitting system according to a second embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.2 comprises the multi-carrier generator circuit 5; the directional coupler 10 for picking up a part of power of the output of the multi-carrier generator circuit 5; local oscillators 20-1 to 20-n for generating local oscillation frequencies set every carrier; frequency mixers 21-1 to 21-n for converting the multi-carrier into an intermediate frequency; IF stage bandpass filters 18-1 to 18-n for limiting the bandwidth of the intermediate frequency; and the detecting means 16-1 to 16-n for outputting detected outputs in response to power levels of the carriers output from the IF stage bandpass filters 18-1 to 18-n.

The IF stage bandpass filters 18-1 to 18-n may employs a SAW filter, for example, and in addition filters whose passing bands have the same center frequency may be employed.

Then, an operation of the multi-carrier transmitting system according to the second embodiment will be explained hereunder.

The directional coupler 10 distributes the multi- carrier 110 supplied from the multi-carrier generator circuit 5 into two ways, and then picks up a part of power of the multi-carrier 110 to input into the multi-carrier level detector circuit 17.

The frequency mixers 21-1 to 21-n in the multi-carrier level detector circuit 17 convert the output of the directional coupler 10 into respective signals having the same intermediate frequency based on outputs of the local oscillators 20-1 to 20-n that are set carrier by carrier.

In addition, the IF stage bandpass filters 18-1 to 18-n limit bandwidths of the intermediate frequencies supplied from the frequency mixers 21-1 to 21-n every carrier, and then input the intermediate frequencies into the detecting means 16-1 to 16-n.

The detecting means 16-1 to 16-n output the detected outputs from intermediate frequency signals, whose bandwidths are limited by the IF stage bandpass filters 18-1 to 18-n, in response to power levels of respective carriers.

According to the second embodiment, since output levels of respective carriers are detected by the multi- carrier level detector circuit 17 based on the multi-carrier 110 as the output of the common amplifier 4, a predetermined transmitting power level can be derived at the final output end by holding the output levels constant even when variation in the constituent parts, etc. is caused due to the environmental changes.

Speaking more precisely, the bandwidths of the intermediate frequencies are limited sharply by converting the output of the directional coupler 10 from the radio frequency into the intermediate frequency, and also by using the SAW filters, etc. as the IF stage bandpass filters 18-1 to 18-n. Therefore, since signal-to-noise ratios of the carriers can be increased after the carriers are passed through the IF stage bandpass filters 18-1 to 18-n, transmitting power levels of the multi-carrier can be detected with high precision by the detecting means 16-1 to 16-n every carrier.

### (Third Embodiment)

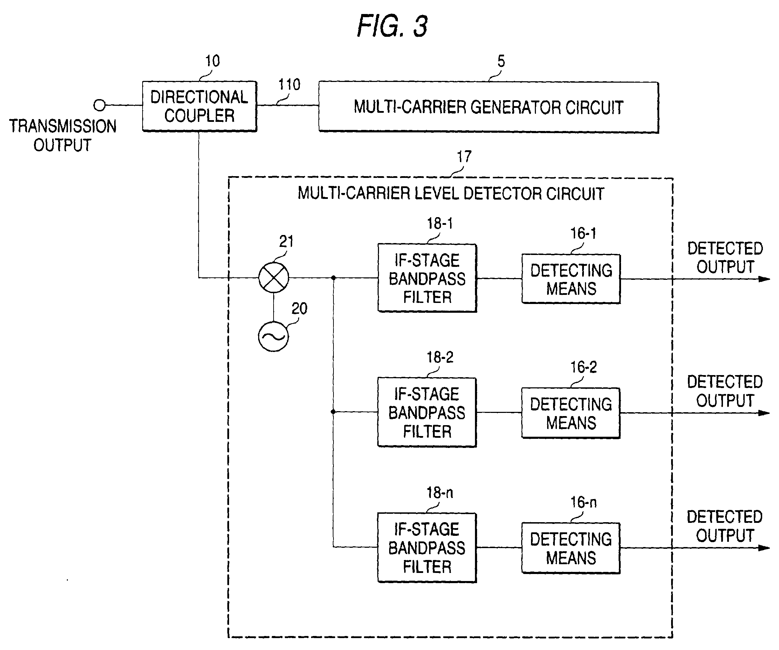

FIG.3 is a block diagram showing a schematic configuration of a multi-carrier transmitting system according to a third embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.3 comprises the multi-carrier generator circuit 5; the directional coupler 10 for picking up a part of power of the output of the multi-carrier generator circuit 5; the local oscillator 20 for generating the same local oscillation frequency; the frequency mixer 21 for converting the output of the directional coupler 10 into the intermediate frequency every carrier; the IF stage bandpass filters 18-1 to 18-n for limiting the bandwidth of the intermediate frequency; and the detecting means 16-1 to 16-n for outputting the detected outputs based on the outputs of the IF stage bandpass filters 18-1 to 18-n in response to power levels of respective carriers.

Then, an operation of the multi-carrier transmitting system according to the third embodiment will be explained hereunder.

The directional coupler 10 distributes the multi- carrier 110 supplied from the multi-carrier generator circuit 5 into two ways, and then picks up a part of power of the multi-carrier 110 to input into the multi-carrier level detector circuit 17.

The frequency mixer 21 in the multi-carrier level detector circuit 17 converts the output of the directional coupler 10 into different intermediate frequencies carrier by carrier based on one local oscillation frequency generated by the local oscillator 20.

The IF stage bandpass filters 18-1 to 18-n limit the bandwidth of the intermediate frequency supplied from the frequency mixer 21 every carrier, and then input the intermediate frequencies of respective carriers into the detecting means 16-1 to 16-n.

The detecting means 16-1 to 16-n output the detected outputs based on the outputs of the IF stage bandpass filters 18-1 to 18-n in response to power levels of respective carriers.

According to the third embodiment, since output levels of respective carriers are detected by the multi-carrier level detector circuit 17 based on the multi-carrier as the output of the common amplifier 4, a predetermined transmitting power level can be derived at the final output end by holding the output levels constant even when variation in the constituent parts, etc. is caused due to the environmental changes.

The number of constituent parts can be reduced since merely one local oscillator 20 is required. In addition, the bandwidths of the intermediate frequencies are limited sharply by converting the output of the directional coupler 10 from the radio frequency into the intermediate frequency, and also by using the SAW filters, etc. as the IF stage bandpass filters 18-1 to 18-n. Therefore, signal-to-noise ratios of the carriers can be increased after the carriers are passed through the IF stage bandpass filters 18-1 to 18-n, and thus transmitting power levels of the multi-carrier can be detected with high precision by the detecting means 16-1 to 16-n carrier by carrier.

### (Fourth Embodiment)

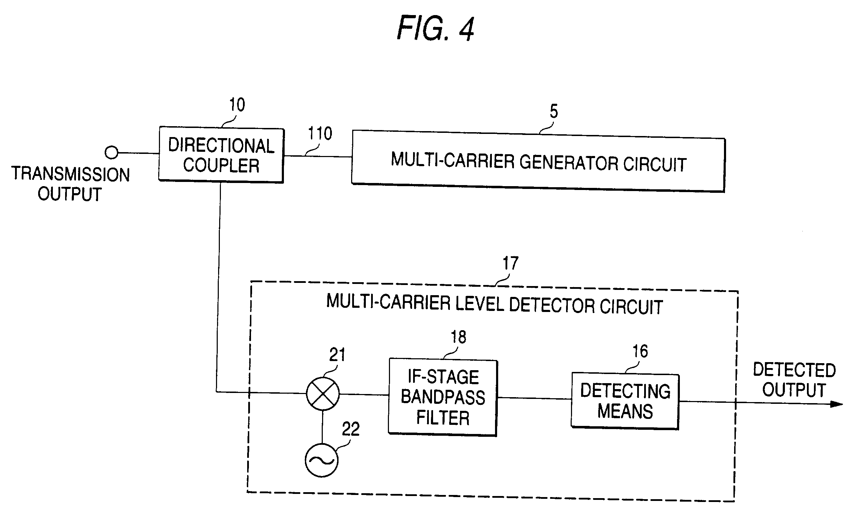

FIG.4 is a block diagram showing a schematic configuration of a multi-carrier transmitting system according to a fourth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.4 comprises the multi-carrier generator circuit 5; the directional coupler 10 for picking up a part of power of the output of the multi-carrier generator circuit 5; the frequency switching type local oscillator 22 for switching the local oscillation frequency to correspond to each carrier; the frequency mixer 21 for converting the output of the directional coupler 10 into the intermediate frequency; the IF stage bandpass filter 18 for limiting the bandwidth of the intermediate frequency; and the detecting means 16 for outputting the detected output based on the output of the IF stage bandpass filter 18 in response to the power level of each carrier.

Then, an operation of the multi-carrier transmitting system according to the fourth embodiment will be explained hereunder.

The directional coupler 10 distributes the multi- carrier 110 supplied from the multi-carrier generator circuit 5 into two ways, and then picks up a part of power of the multi-carrier 110 to input into the multi-carrier level detector circuit 17.

The frequency mixer 21 in the multi-carrier level detector circuit 17 converts the output of the directional coupler 10 into the same intermediate frequency based on the local oscillation frequency generated by the frequency switching type local oscillator 22.

The IF stage bandpass filter 18 limits the bandwidth of the intermediate frequency supplied from the frequency mixer 21, and then input the bandwidth-limited intermediate frequency into the detecting means 16. This detecting means 16 outputs the detected output in response to the power level of the bandwidth-limited intermediate frequency.

According to the fourth embodiment, the output level of each carrier is detected by the multi-carrier level detector circuit 17 based on the multi-carrier as the output of the common amplifier 4. Therefore, a predetermined transmitting power level can be derived at the final output end by holding the output level constant even when variation in the constituent parts, etc. is caused due to the environmental changes.

Also, since the local oscillation frequency of each multi-carrier is switched by using the frequency switching type local oscillator 22, the intermediate frequency can be set to the same frequency after the carrier is passed through the frequency mixer 21. In addition, since merely the IF stage bandpass filter 18 that limits the bandwidth of the intermediate frequency and the detecting means 16 that outputs the detected output in response to the transmitting power level for one carrier may be equipped, the number of the constituting parts can be reduced.

### (Fifth Embodiment)

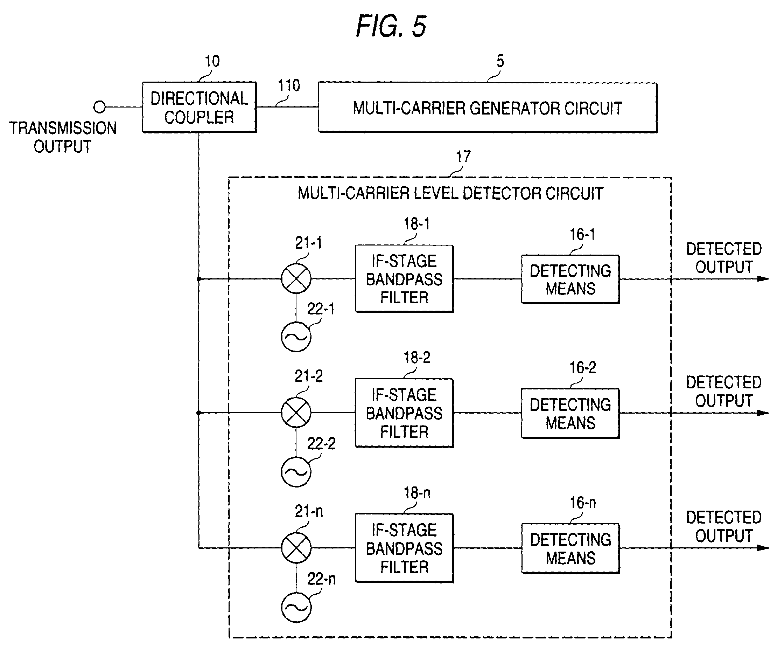

FIG.5 is a block diagram showing a schematic configuration of a multi-carrier transmitting system according to a fifth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.5 comprises the multi-carrier generator circuit 5; the directional coupler 10 for picking up a part of power of the output of the multi-carrier generator circuit 5; frequency switching type local oscillators 22-1 to 22-n for switching the local oscillation frequency; frequency mixers 21-1 to 21-n for converting the output of the directional coupler 10 into the intermediate frequency; IF stage bandpass filters 18-1 to 18-n for limiting the bandwidth of the intermediate frequency of respective carriers; and detecting means 16-1 to 16-n for outputting the detected output in response to the power level of respective multi-carriers.

Then, an operation of the multi-carrier transmitting system according to the fifth embodiment will be explained hereunder.

The directional coupler 10 distributes the multi- carrier 110 supplied from the multi-carrier generator circuit 5 into two ways, and then picks up a part of power of the multi-carrier 110 to input into the multi-carrier level detector circuit 17.

The frequency mixers 21-1 to 21-n in the multi-carrier level detector circuit 17 convert the output of the directional coupler 10 into the same intermediate frequency, based on the local oscillation frequencies from the frequency switching type local oscillators 22-1 to 22-n to which a plurality of local oscillation frequencies are allocated for respective carriers of the multi-carrier 110.

The IF stage bandpass filters 18-1 to 18-n limit the bandwidth of the intermediate frequencies supplied from the frequency mixers 21-1 to 21-n, and then input the bandwidth- limited intermediate frequency into the detecting means 16-1 to 16-n. The detecting means 16-1 to 16-n output the detected outputs of respective carriers in response to the power level of the bandwidth-limited intermediate frequencies.

According to the fifth embodiment, the output levels of respective carriers are detected by the multi-carrier level detector circuit 17 based on the multi-carrier as the output of the common amplifier 4. Therefore, a predetermined transmitting power level can be derived at the final output end by holding the output level constant even when variation in the constituent parts, etc. is caused due to the environmental changes.

In addition, since a plurality of frequency switching type local oscillators 22-1 to 22-n are provided to respective carriers, transmitting power level of the multi-carrier can be detected carrier by carrier even if the number of carriers of the multi-carrier is increased. Furthermore, the bandwidths of the intermediate frequencies are limited sharply by converting the multi-carrier from the radio frequency into the intermediate frequency, and also by using the SAW filters, etc. as the IF stage bandpass filters 18-1 to 18-n. Therefore, since signal-to-noise ratios of the carriers can be increased after the carriers are passed through the IF stage bandpass filters 18-1 to 18-n, the transmitting power level of the multi-carrier having the wide-bandwidth can be detected with high precision by the detecting means 16-1 to 16-n carrier by carrier.

### (Sixth Embodiment)

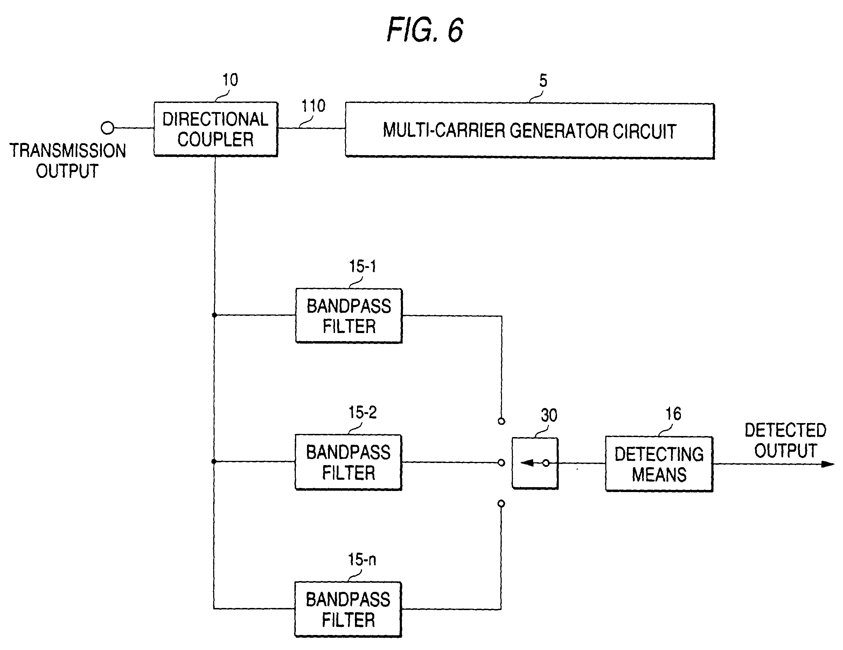

FIG.6 is a block diagram showing a schematic configuration of a multi-carrier transmitting system according to a sixth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.6 comprises the multi-carrier generator circuit 5; the directional coupler 10 for picking up a part of power of the output of the multi-carrier generator circuit 5; bandpass filters 15-1 to 15-n for limiting the bandwidth of the output of the directional coupler 10 every carrier; a high frequency switch 30 for switching outputs of the bandpass filters 15-1 to 15-n selectively; and the detecting means 16 for outputting the detected output in response to the power level of each carrier that is switched selectively by the detecting means 16.

Then, an operation of the multi-carrier transmitting system according to the sixth embodiment will be explained hereunder.

The directional coupler 10 distributes the multi- carrier 110 supplied from the multi-carrier generator circuit 5 into two ways, and then picks up a part of power of the multi-carrier 110 to input into the bandpass filters 15-1 to 15-n.

The bandpass filters 15-1 to 15-n limit the bandwidth of the output of the directional coupler 10 every carrier, and then input the respective carriers into the high frequency switch 30.

The high frequency switch 30 switches the carries supplied from the bandpass filters 15-1 to 15-n selectively, and then input the selectively-switched carrier into the detecting means 16.

This detecting means 16 outputs the detected output in response to the power level of the selectively-switched carrier.

According to the sixth embodiment, the output level of each carrier is detected based on the multi-carrier as the output of the common amplifier 4. Therefore, a predetermined transmitting power level can be derived at the final output end by holding the output level constant even when variation in the constituent parts, etc. is caused due to the environmental changes.

In addition, the transmitting power level of the multi-carrier can be detected every carrier and also the high frequency switch 30 is arranged at the preceding stage of the detecting means 16. Therefore, the detecting means 16 can be used commonly, and thus there is no necessity that the detecting means 16 should be provided to correspond to the number of carriers, and in turn the number of parts can be reduced.

### (Seventh Embodiment)

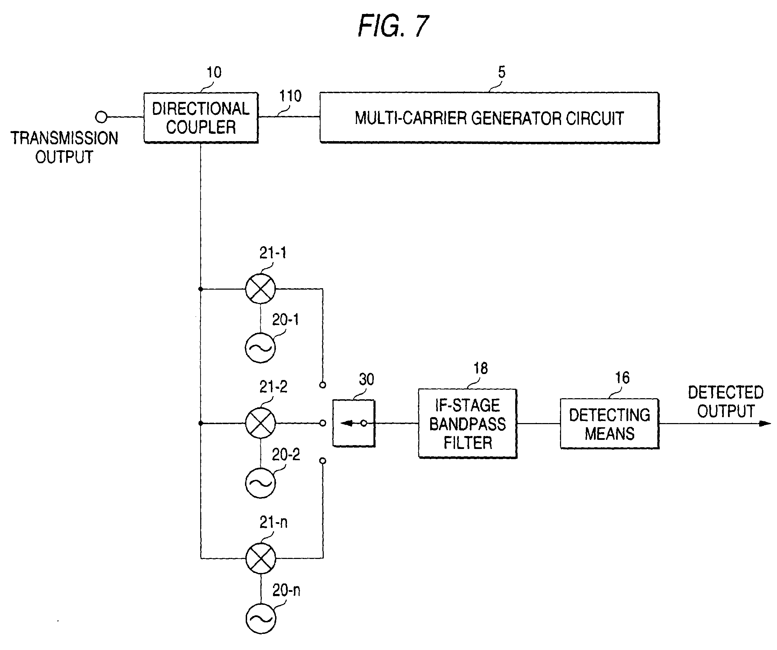

FIG.7 is a block diagram showing a schematic configuration of a multi-carrier transmitting system according to a seventh embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.7 comprises the multi-carrier generator circuit 5; the directional coupler 10 for picking up a part of power of the output of the multi-carrier generator circuit 5; the local oscillators 20-1 to 20-n for generating local oscillation frequencies set every carrier; frequency mixers 21-1 to 21-n for converting the output of the directional coupler 10 into the intermediate frequency; the high frequency switch 30 for switching the intermediate frequencies from the frequency mixers 21-1 to 21-n selectively; the IF stage bandpass filter 18 for limiting the bandwidth of the intermediate frequency that is switched selectively by the high frequency switch 30; and the detecting means 16 for outputting the detected output in response to the power level of the bandwidth-limited intermediate frequency.

Then, an operation of the multi-carrier transmitting system according to the seventh embodiment will be explained hereunder.

The directional coupler 10 distributes the multi- carrier 110 supplied from the multi-carrier generator circuit 5 into two ways, and then picks up a part of power to input into the frequency mixers 21-1 to 21-n.

The frequency mixers 21-1 to 21-n convert the output of the directional coupler 10 into the same intermediate frequency by the local oscillators 20-1 to 20-n every carrier. Then, the high frequency switch 30 switches the intermediate frequencies supplied from the frequency mixers 21-1 to 21-n selectively, and then input the selectively-switched intermediate frequency into the IF stage bandpass filter 18. The IF stage bandpass filter 18 limits the bandwidth of the intermediate frequency being selectively-switched by the high frequency switch 30, and then input the bandwidth-limited intermediate frequency into the detecting means 16.

The detecting means 16 outputs the power level of the bandwidth-limited intermediate frequency as the detected output of respective carriers in response to power level of each multi-carrier.

According to the seventh embodiment, the output level of each carrier is detected based on the multi-carrier as the output of the common amplifier 4. Therefore, a predetermined transmitting power level can be derived at the final output end by holding the output level constant even when variation in the constituent parts, etc. is caused due to the environmental changes.

In addition, since the high frequency switch 30 is arranged at the output stages of the frequency mixers 21-1 to 21-n, there is no necessity that the IF stage bandpass filters 18 which need an installing space should be provided to correspond to the number of carriers. Therefore, only one IF stage bandpass filter 18 is required, and thus the number of parts can be reduced.

In this case, normally not only the desired intermediate frequencies but also other unnecessary spurious components are output simultaneously from the outputs of the frequency mixers 21-1 to 21-n. Therefore, in the case that the high frequency switch 30 is arranged at the output stages of the frequency mixers 21-1 to 21-n, more than two signal components are input into the high frequency switch 30. As a result, such a situation is brought about that distortion occurs in the high frequency switch 30.

For this reason, in order to deal with such situation, a multi-carrier transmitting system discussed in the following according to an eighth embodiment is proposed.

### (Eighth Embodiment)

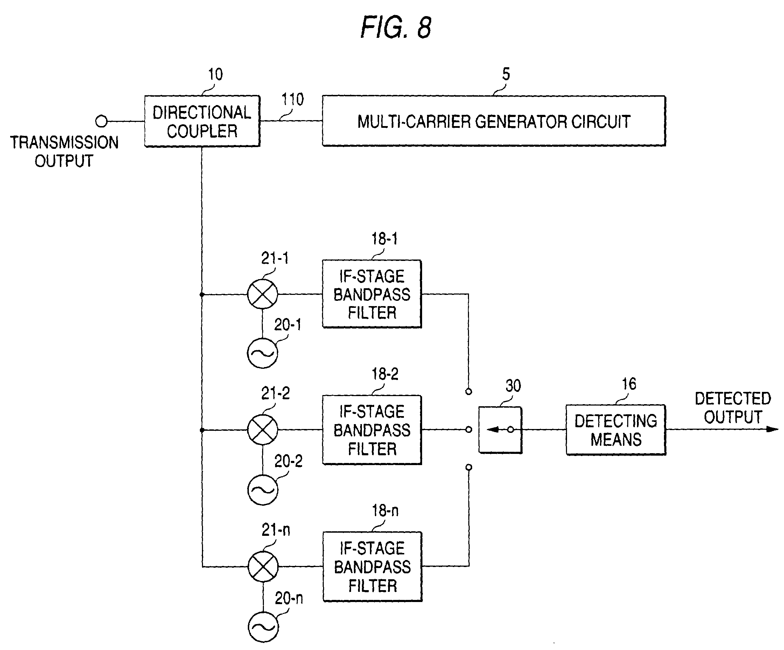

FIG.8 is a block diagram showing a schematic configuration of a multi-carrier transmitting system according to an eighth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.8 comprises the multi-carrier generator circuit 5; the directional coupler 10 for picking up a part of power of the output of the multi-carrier generator circuit 5; the local oscillators 20-1 to 20-n for generating local oscillation frequencies set every carrier; the frequency mixers 21-1 to 21-n for converting the output of the directional coupler 10 into the intermediate frequency based on the local oscillation frequencies; the IF stage bandpass filters 18-1 to 18-n for limiting the bandwidths of the intermediate frequencies from the frequency mixers 21-1 to 21-n; the high frequency switch 30 for switching the outputs of the IF stage bandpass filters 18-1 to 18-n selectively; and the detecting means 16 for outputting the detected output based on the output being selectively switched by the high frequency switch 30 in response to the power level of the output.

Then, an operation of the multi-carrier transmitting system according to the eighth embodiment will be explained hereunder.

The directional coupler 10 distributes the multi- carrier 110 supplied from the multi-carrier generator circuit 5 into two ways, and then picks up a part of power to input into the frequency mixers 21-1 to 21-n. The frequency mixers 21-1 to 21-n convert the output of the directional coupler 10 into the intermediate frequencies based on the oscillation frequencies of the local oscillators 20-1 to 20-n every carrier. Then, the IF stage bandpass filters 18-1 to 18-n limit the bandwidth to remove the spurious component from the intermediate frequencies supplied from the frequency mixers 21-1 to 21-n.

The high frequency switch 30 switches the intermediate frequencies being bandwidth limited by the IF stage bandpass filters 18-1 to 18-n selectively, and then input the selectively-switched intermediate frequency into the detecting means 16.

The detecting means 16 outputs the detected output in response to the power level of the intermediate frequency being selectively switched by the high frequency switch 30, i.e., power level of each multi-carrier.

According to the eighth embodiment, the output level of each carrier is detected based on the multi-carrier as the output of the common amplifier 4. Therefore, a predetermined transmitting power level can be derived at the final output end by holding the output level constant even when variation in the constituent parts, etc. is caused due to the environmental changes.

In addition, the IF stage bandpass filters 18-1 to 18-n are arranged at the output stages of the frequency mixers 21-1 to 21-n. Therefore, the power level can be detected by the detecting means 16 after unnecessary spurious components supplied from the frequency mixers 21-1 to 21-n are removed and then the intermediate frequencies are switched selectively by the high frequency switch 30, so that the level can be detected with high precision every carrier.

Furthermore, since the high frequency switch 30 is arranged at the preceding stage of the detecting means 16, such detecting means 16 can be used commonly. Therefore, there is no necessity that the detecting means 16 should be provided to correspond to the number of carriers, and in turn the number of parts can be reduced.

### (Ninth Embodiment)

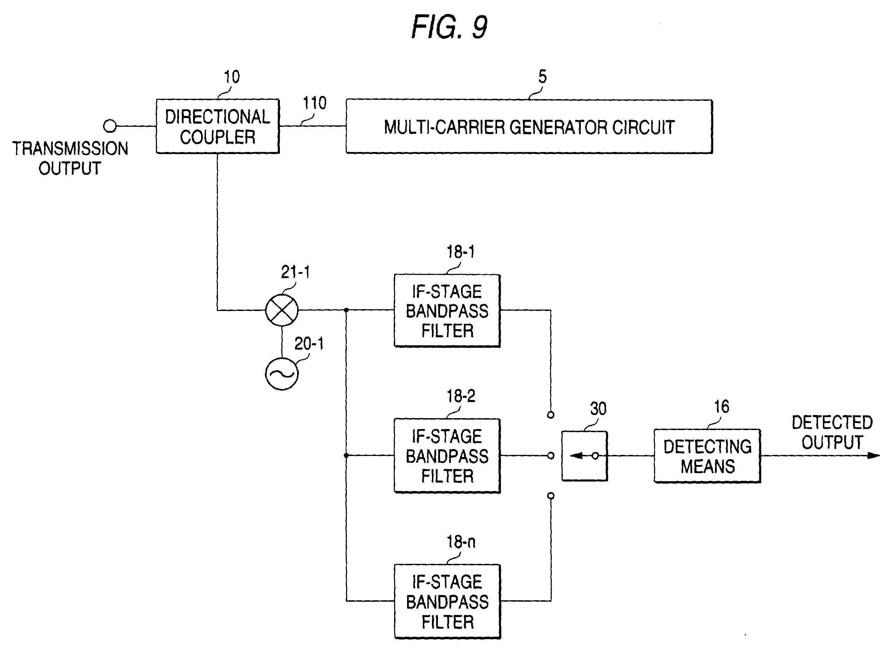

FIG.9 is a block diagram showing a schematic configuration of a multi-carrier transmitting system according to a ninth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.9 comprises the multi-carrier generator circuit 5; the directional coupler 10 for picking up a part of power of the output of the multi-carrier generator circuit 5; the local oscillator 20-1 for generating the same local oscillation frequency; the frequency mixer 21-1 for converting the output of the directional coupler 10 into the intermediate frequency; the IF stage bandpass filters 18-1 to 18-n for limiting the bandwidth of the intermediate frequency from the frequency mixer 21-1; the high frequency switch 30 for switching the outputs of the IF stage bandpass filters 18-1 to 18-n selectively; and the detecting means 16 for outputting the detected output in response to the power level of the intermediate frequency being selectively switched by the high frequency switch 30 every carrier.

Then, an operation of the multi-carrier transmitting system according to the ninth embodiment will be explained hereunder.

The directional coupler 10 distributes the multi- carrier 110 supplied from the multi-carrier generator circuit 5 into two ways, and then picks up a part of power to input into the frequency mixer 21-1. The frequency mixer 21-1 converts the output of the directional coupler 10 into the intermediate frequency based on one oscillation frequency of the local oscillator 20-1.

The IF stage bandpass filters 18-1 to 18-n limit the bandwidth of the intermediate frequency. The high frequency switch 30 switches the outputs of the IF stage bandpass filters 18-1 to 18-n selectively, and then input the selectively-switched output into the detecting means 16.

The detecting means 16 outputs the detected output based on the output being selectively switched by the high frequency switch 30 in response to the power level of each multi-carrier.

According to the ninth embodiment, the output level of each carrier is detected based on the multi-carrier as the output of the common amplifier 4. Therefore, a predetermined transmitting power level can be derived at the final output end by holding the output level constant even when variation in the constituent parts, etc. is caused due to the environmental changes.

In addition, since the transmitting power level of the multi-carrier is detected every carrier and also the high frequency switch 30 is arranged at the preceding stage of the detecting means 16, such detecting means 16 can be used commonly. Therefore, there is no necessity that the detecting means 16 should be provided to correspond to the number of carriers, and in turn the number of parts can be reduced.

### (Tenth Embodiment)

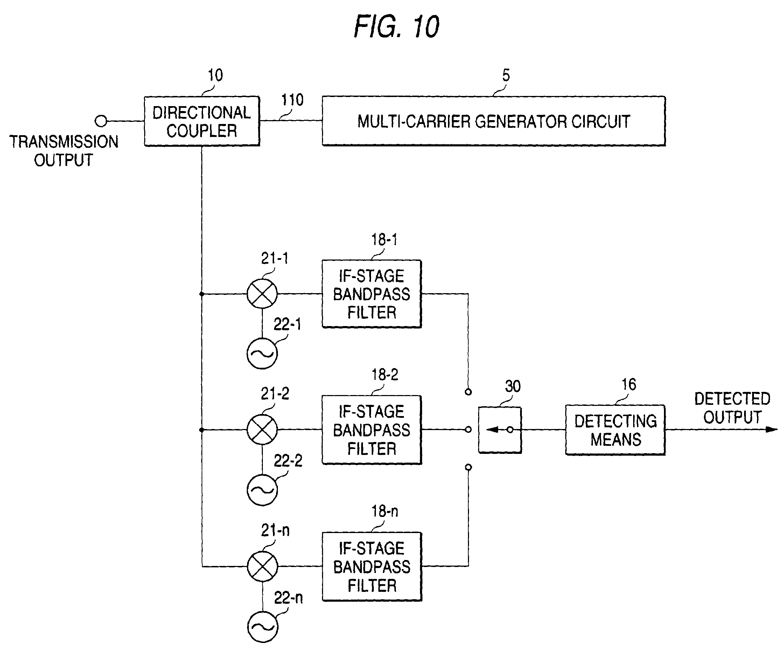

FIG.10 is a block diagram showing a schematic configuration of a multi-carrier transmitting system according to a tenth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.10 comprises the multi-carrier generator circuit 5; the directional coupler 10 for picking up a part of power of the output of the multi-carrier generator circuit 5; the frequency switching type local oscillators 22-1 to 22-n for switching the local oscillation frequency; the frequency mixers 21-1 to 21-n for converting the output of the directional coupler 10 into the intermediate frequency; the IF stage bandpass filters 18-1 to 18-n for limiting the bandwidths of the intermediate frequencies from the frequency mixers 21-1 to 21-n; the high frequency switch 30 for switching the outputs of the IF stage bandpass filters 18-1 to 18-n selectively; and the detecting means 16 for outputting the detected output in response to the power level of the output being selectively switched by the high frequency switch 30.

Then, an operation of the multi-carrier transmitting system according to the tenth embodiment will be explained hereunder.

The directional coupler 10 distributes the multi- carrier 110 supplied from the multi-carrier generator circuit 5 into two ways, and then picks up a part of power to input into the frequency mixers 21-1 to 21-n.

The frequency mixers 21-1 to 21-n convert the output of the directional coupler 10 into the same intermediate frequency, by the frequency switching type local oscillators 22-1 to 22-n to which a plurality of local oscillation frequencies are allocated for respective carriers of the multi-carrier 110.

The IF stage bandpass filter 18-1 to 18-n limit the bandwidths of the intermediate frequencies supplied from the frequency mixers 21-1 to 21-n, and then input the bandwidth-limited intermediate frequency into the high frequency switch 30.

The high frequency switch 30 switches the outputs of the IF stage bandpass filters 18-1 to 18-n selectively, and then input the selectively-switched intermediate frequency into the detecting means 16. The detecting means 16 outputs the detected output in response to the power level of the intermediate frequency being selectively switched by the high frequency switch 30.

According to the tenth embodiment, the output level of each carrier is detected based on the multi-carrier as the output of the common amplifier 4. Therefore, a predetermined transmitting power level can be derived at the final output end by holding the output level constant even when variation in the constituent parts, etc. is caused due to the environmental changes.

In addition, even if the number of carriers of the multi-carrier is increased, the transmitting power level can be detected every carrier. Moreover, the high frequency switch 30 is arranged at the preceding stage of the detecting means 16, such detecting means 16 can be used commonly. Therefore, there is no necessity that the detecting means 16 should be provided to correspond to the number of carriers, and in turn the number of parts can be reduced.

### (Eleventh Embodiment)

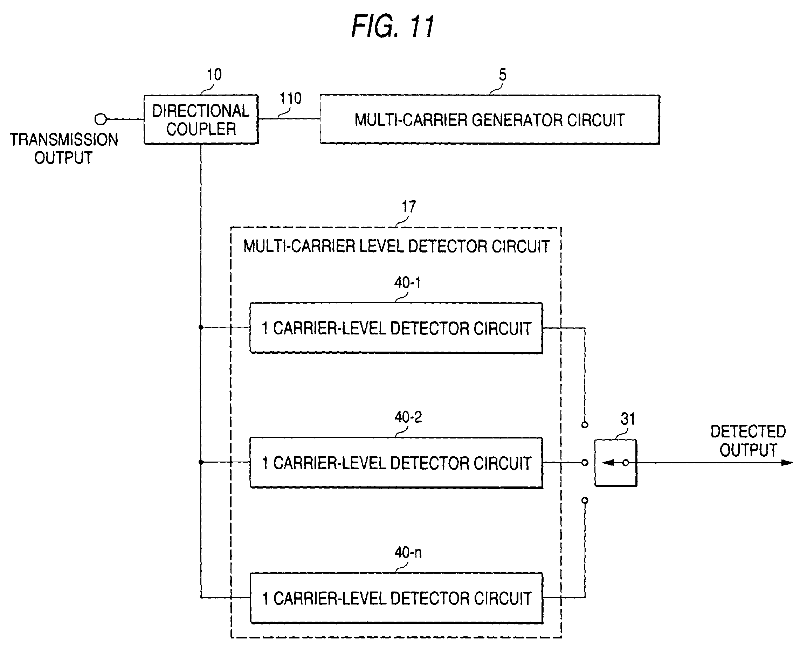

FIG.11 is a block diagram showing a schematic configuration of a multi-carrier transmitting system according to an eleventh embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.11 comprises the multi-carrier generator circuit 5; the directional coupler 10 for picking up a part of power of the output of the multi-carrier generator circuit 5; the multi-carrier level detector circuit 17 that has 1 carrier level detector circuits 40-1 to 40-n for detecting the transmitting power level for one carrier; and an analog switch 31 for switching outputs of the 1 carrier level detector circuits 40-1 to 40-n in the multi-carrier level detector circuit 17 selectively.

Then, an operation of the multi-carrier transmitting system according to the eleventh embodiment will be explained hereunder.

The directional coupler 10 distributes the multi- carrier 110 supplied from the multi-carrier generator circuit 5 into two ways, and then picks up a part of power to input into the 1 carrier level detector circuits 40-1 to 40-n in the multi-carrier level detector circuit 17.

The 1 carrier level detector circuits 40-1 to 40-n output the detected output for one carrier from the output of the directional coupler 10, and then input the detected output for one carrier into the analog switch 31.

The analog switch 31 switches the detected outputs of the 1 carrier level detector circuits 40-1 to 40-n with respect to one carrier selectively.

According to the eleventh embodiment, the output level of each carrier is detected by the multi-carrier level detector circuit 17 based on the multi-carrier as the output of the common amplifier 4. Therefore, even when variation in the constituent parts, etc. is caused due to the environmental changes, a predetermined transmitting power level can be derived at the final output end by keeping the output level constant.

In addition, like the multi-carrier transmitting system according to the ninth embodiment, for example, in the case that the high frequency switch is arranged at the preceding stage of the detecting means 16, such a situation may be thought of that the detected output being output from the detecting means 16 is varied because it is affected by the variation in insertion loss of the high frequency switch 30. On the contrary, according to this eleventh embodiment, since the analog switch 31 is provided to the output stage of the detecting means 16, the transmitting power level of the multi-carrier can be detected every carrier without the influence of the variation in the insertion loss of the analog switch 31.

### (Twelfth Embodiment)

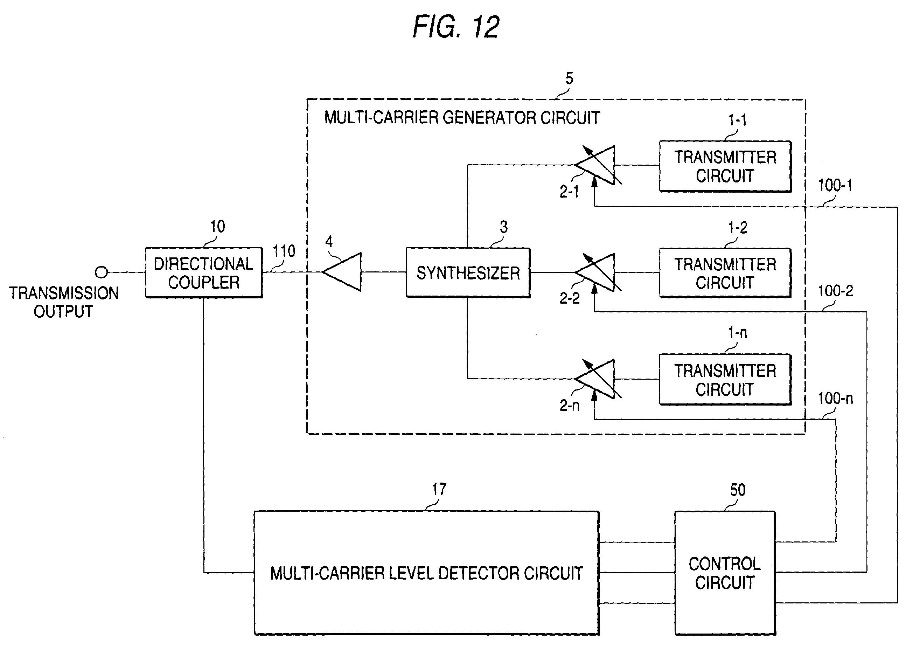

FIG.12 is a block diagram showing a schematic configuration of a multi-carrier transmitting system according to a twelfth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.12 comprises the multi-carrier generator circuit 5; the directional coupler 10 for picking up a part of power of the output of the multi-carrier generator circuit 5; the multi-carrier level detector circuit 17 for detecting the power level of each carrier as the output of the directional coupler 10; and a control circuit 50 for applying feedback control to the multi-carrier generator circuit 5 by using the detected output of the multi-carrier level detector circuit 17.

Then, an operation of the multi-carrier transmitting system according to the twelfth embodiment will be explained hereunder.

The directional coupler 10 distributes the multi- carrier 110 supplied from the multi-carrier generator circuit 5 into two ways, and then picks up a part of power to input into the 1 carrier level detector circuits 40-1 to 40-n in the multi-carrier level detector circuit 17.

The multi-carrier level detector circuit 17 inputs the detected output into the control circuit 50 based on the output of the directional coupler 10 in response to the power level for each carrier.

The control circuit 50 outputs gain control signals 100-1 to 100-n which control gains of the variable gain amplifiers 2-1 to 2-n for respective carriers in response to the detected output from the multi-carrier level detector circuit 17 for respective carriers.

This control circuit 50 stores values of gain control signals 100-1 to 100-n corresponding to the transmitting outputs of respective multi-carriers. Then, the control circuit 50 outputs the gain control signals 100-1 to 100-n such that, unless the predetermined transmitting output can be obtained, the gain control signals 100-1 to 100-n are output to increase the gains of the variable gain amplifiers 2-1 to 2-n and, if the output power level exceeds the predetermined transmitting output, the gain control signals 100-1 to 100-n are output to lower the gains of the variable gain amplifiers 2-1 to 2-n.

According to the twelfth embodiment, since a part of power of respective carriers is extracted based on the output of the common amplifier 4 by using the directional coupler 10, the transmitting power level is never affected by the variation in respective gains from the synthesizer to the common amplifier, unlike the prior art. Therefore, the transmitting power level of the multi-carrier can be detected every carrier, and thus the precision of the transmitting power level of the output of the multi-carrier transmitting system can be enhanced.

### (Thirteenth Embodiment)

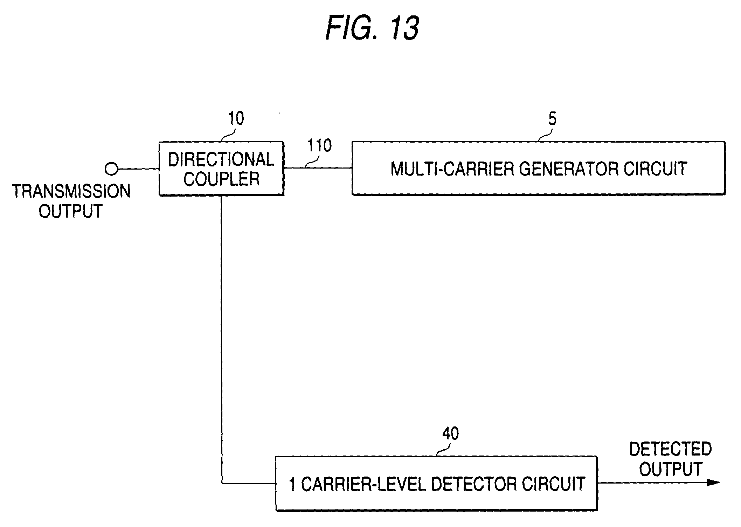

FIG.13 is a block diagram showing a schematic configuration of a multi-carrier transmitting system according to a thirteenth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.13 comprises the multi-carrier generator circuit 5; the directional coupler 10 for picking up a part of power of the output of the multi-carrier generator circuit 5; and the 1 carrier level detector circuit 40 for outputting the detected one carrier output (transmitting power level) based on the output of the directional coupler 10.

Then, an operation of the multi-carrier transmitting system according to the thirteenth embodiment will be explained hereunder.

The directional coupler 10 distributes the multi- carrier 110 supplied from the multi-carrier generator circuit 5 into two ways, and then picks up a part of power to input into the 1 carrier level detector circuit 40. This 1 carrier level detector circuit 40 detects and outputs the transmitting power level for one carrier based on the output of the directional coupler 10.

Here, in this thirteenth embodiment, the transmitting power level for one carrier is detected and output by the 1 carrier level detector circuit 40. In this case, since all the transmitter circuits 1-1 to 1-n for generating respective carriers are provided in the multi-carrier generator circuit 5, environmental conditions of the transmitter circuit 1-1 such as the temperature, etc. can be regarded identical to other transmitter circuits 1-2 to 1-n. Therefore, an amount of change in the transmitting power level of respective carriers are equal in all transmitter circuits and thus, if the transmitting power level of the transmitter circuit 1-1, for example, is detected by the 1 carrier level detector circuit 40, a resultant detected power, i.e., an amount of change in the transmitting power level can be applied to those in the transmitting power levels of other transmitter circuits 1-2 to 1-n.

Therefore, according to the thirteenth embodiment, one carrier output level in the multi-carrier is detected as the transmitting power level of the multi-carrier by using the 1 carrier level detector circuit 40, then environmental conditions in the system are presumed based on this output level, and then such environmental conditions are applied to other carriers in addition to this carrier. As a result, there is no need that portions for detecting output levels corresponding to the number of carriers should be provided, and in turn the number of the constituent parts can be reduced.

### (Fourteenth Embodiment)

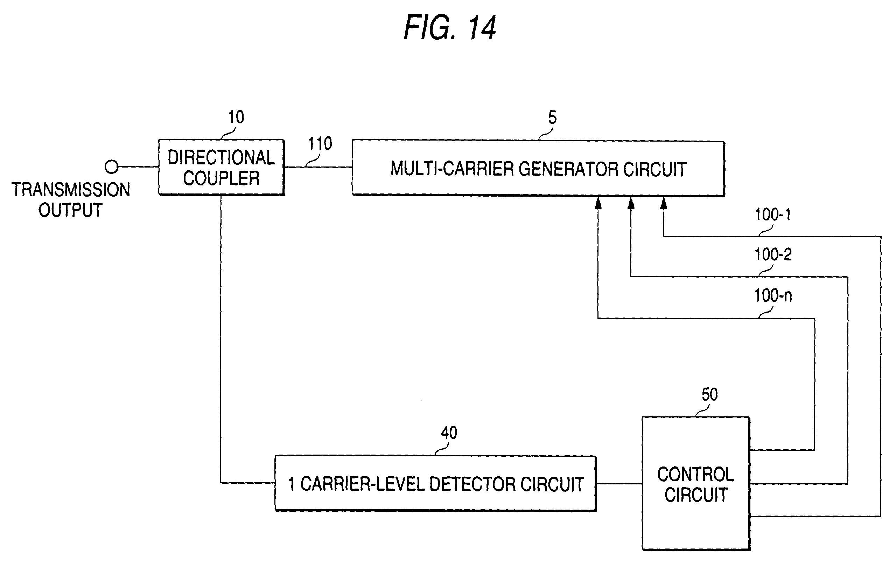

FIG.14 is a block diagram showing a schematic configuration of a multi-carrier transmitting system according to a fourteenth embodiment of the present invention. In this case, since same reference symbols are affixed to duplicate configurations with the multi-carrier transmitting system shown in FIG.1, explanation of their configuration and operation will be omitted.

The multi-carrier transmitting system shown in FIG.14 comprises the multi-carrier generator circuit 5; the directional coupler 10 for picking up a part of power of the output of the multi-carrier generator circuit 5; the 1 carrier level detector circuit 40 for detecting the transmitting power level for one carrier (detected output) based on the output of the directional coupler 10; and a control circuit 50 for applying feedback control to the multi-carrier generator circuit 5 by using the output of the 1 carrier level detector circuit 40.

Then, an operation of the multi-carrier transmitting system according to the fourteenth embodiment will be explained hereunder.

The directional coupler 10 distributes the multi- carrier 110 supplied from the multi-carrier generator circuit 5 into two ways, and then picks up a part of power to input into the 1 carrier level detector circuit 40.

This 1 carrier level detector circuit 40 detects the one carrier detected output (transmitting power level) based on the output of the directional coupler 10.

The control circuit 50 presumes an amount of change in transmitting power levels of other carriers, based on the one carrier detected output detected by the 1 carrier level detector circuit 40.

For example, in the event that the 1 carrier level detector circuit 40 is constructed to detect merely the transmitting power level for one carrier generated in the transmitter circuit 1-1, the control circuit 50 presumes an amount of change in the transmitting power level due to environmental conditions of the transmitter circuits 1-2 to 1-n such as the temperature, etc. as the transmitting power level of the carriers generated by other transmitter circuits 1-2 to 1-n, based on the transmitting power level obtained by the 1 carrier level detector circuit 40.

The control circuit 50 stores values of the gain control signals 100-1 to 100-n to correspond to the transmitting power levels. Then, based on the presumed amount of change in the transmitting power level, the control circuit 50 outputs the gain control signals 100-1 to 100-n to increase the gains of the variable gain amplifiers 2-1 to 2-n unless the predetermined transmitting output can be obtained, and also outputs the gain control signals 100-1 to 100-n to lower the gains of the variable gain amplifiers 2-1 to 2-n if the output power level exceeds the predetermined transmitting output.

Therefore, according to the fourteenth embodiment, one carrier output level in the multi-carrier is detected as the transmitting power level of the multi-carrier by using the 1 carrier level detector circuit 40, and then gains of all variable gain amplifiers 2-1 to 2-n are controlled based on the output level. As a result, there is no need that portions for detecting output levels corresponding to the number of carriers should be provided, and in turn the number of the constituent parts can be reduced.

Also, an error of the transmitting power of each multi-carrier can be reduced in the output of the multi-carrier transmitting system.

### (Fifteenth Embodiment)

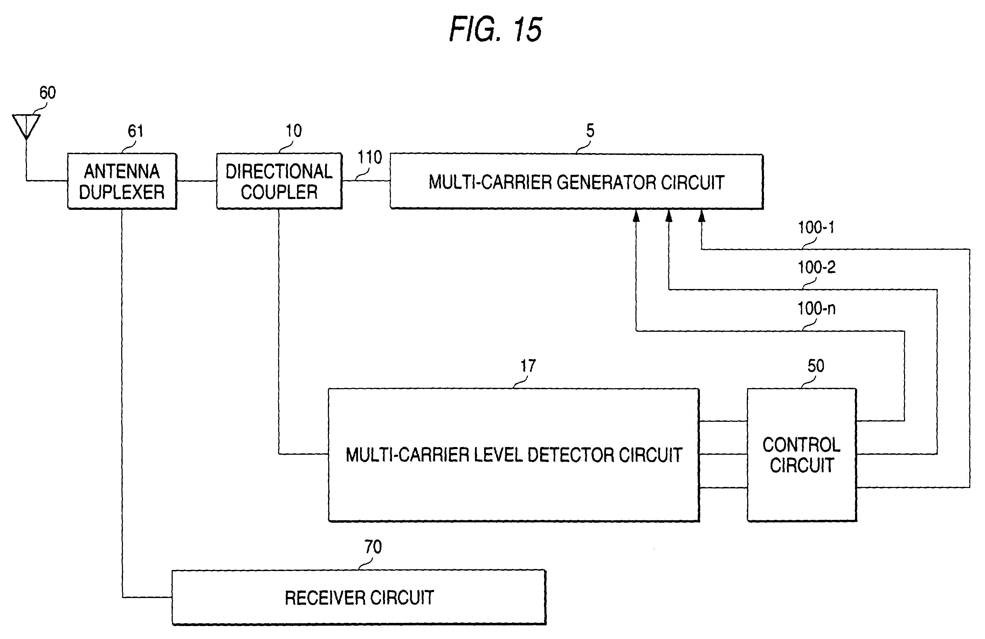

FIG.15 is a block diagram showing a schematic configuration of a radio base station equipment employing a multi-carrier transmitting system according to a fifteenth embodiment of the present invention.

The multi-carrier transmitting system shown in FIG.14 comprises an antenna 60; an antenna duplexer 61; the multi-carrier generator circuit 5; the directional coupler 10 for picking up a part of power of the output of the multi-carrier generator circuit 5; the multi-carrier level detector circuit 17 for detecting the power level of each multi-carrier in the output of the directional coupler 10; the control circuit 50 for applying feedback control to the multi-carrier generator circuit 5 by using the output of the multi-carrier level detector circuit 17; and a receiver circuit 70 for executing the receiving process of the radio wave received from the antenna 60.

Then, an operation of the radio base station equipment according to the fifteenth embodiment will be explained hereunder.

The directional coupler 10 distributes the multi- carrier 110 supplied from the multi-carrier generator circuit 5 into two ways. One output of the directional coupler 10 is transmitted from the antenna 60 via the antenna duplexer 61 into a space as the radio wave. The other output of the directional coupler 10 is input into the multi-carrier level detector circuit 17.

The multi-carrier level detector circuit 17 detects the detected output from the output of the directional coupler 10 in response to the power level of each carrier, and then inputs the detected output into the control circuit 50. This control circuit 50 applies feedback control to the multi-carrier generator circuit 5.

The control circuit 50 stores values of the gain control signals 100-1 to 100-n that correspond to the transmitting outputs of respective multi-carrier. The control circuit 50 outputs the gain control signals 100-1 to 100-n to the variable gain amplifiers 2-1 to 2-n in the multi-carrier generator circuit 5 to control the gains of the carriers generated in the transmitter circuits 1-1 to 1-n.

The radio wave received by the antenna 60 is subjected to the frequency bandwidth limitation by the antenna duplexer 61 and then the receiving process by the receiver circuit 70.

According to the fifteenth embodiment, a part of power of the carrier is picked up by the directional coupler 10 at the output stage of the common amplifier 4 in the multi-carrier generator circuit 5, and then the transmitting power level of the picked-up multi-carrier is detected every carrier by the multi-carrier level detector circuit 17. Therefore, an error of the transmitting power of each multi-carrier can be reduced in the output of the radio base station equipment.

### (Sixteenth Embodiment)

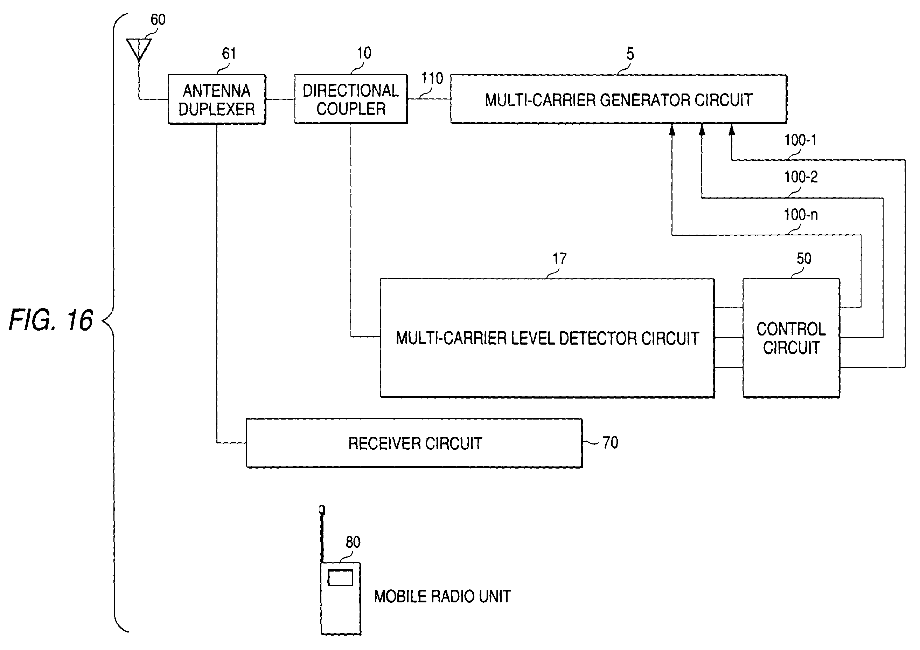

FIG.16 is a block diagram showing a schematic configuration of a radio communication system comprising a radio base station equipment employing a multi-carrier transmitting system according to a sixteenth embodiment of the present invention. In this case, since same reference symbols are affixed to duplicate configurations with the radio base station equipment shown in FIG.15 and having the multi-carrier transmitting system, explanation of their configuration and operation will be omitted.

The radio communication system shown in FIG.16 comprises the radio base station equipment, and a radio mobile unit 80 connected mutually to the radio base station equipment by using the radio wave having the same frequency.

According to the sixteenth embodiment, an error of the transmitting power level of each multi-carrier can be reduced in the output of the multi-carrier transmitting system. That is, the transmitting power can be supplied with high precision to the radio mobile unit 80 which transmits/receives the multi-carrier to/from the radio base station equipment.

According to the multi-carrier transmitting system constructed as above according to the present invention, the output level of each carrier is detected based on the multi-carrier as the output of the common amplifier. Therefore, even when variation in the constituent parts, etc. is caused due to the environmental changes, a predetermined transmitting power level can be derived at the final output end by keeping the output level constant.

Also, according to the radio base station equipment according to the present invention, an error of the transmitting power of each multi-carrier can be reduced in the output of the radio base station equipment.

According to the radio communication system according to the present invention, an error of the transmitting power level of each multi-carrier can be reduced in the output of the multi-carrier transmitting system. That is, the transmitting power can be supplied with high precision to the radio mobile unit 80 which transmits/receives the multi-carrier to/from the radio base station equipment.

## Claims

1. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a plurality of bandpass filters for limiting a bandwidth of an output of the coupler every carrier; and
a plurality of detecting means for detecting a level of the carrier respectively.

2. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a plurality of frequency mixers for converting an output of the coupler into intermediate frequencies;
a plurality of local oscillators for generating local oscillation frequencies to be input into the frequency mixers;
a plurality of IF stage bandpass filters for bandwidth- limiting the intermediate frequencies supplied from the frequency mixers every carrier; and
a plurality of detecting means for detecting levels of the intermediate frequencies which are bandwidth- limited by the IF stage bandpass filters.

3. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a frequency mixer for converting an output of the coupler into an intermediate frequency;
a local oscillator for generating one local oscillation frequency;
a plurality of IF stage bandpass filters for bandwidth- limiting the intermediate frequency supplied from the frequency mixer every carrier; and
a plurality of detecting means for detecting a level of the intermediate frequency every carrier.

4. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a frequency mixer for converting an output of the coupler into an intermediate frequency;
a local oscillator for switching a local oscillation frequency such that respective carriers of a multi-carrier can be converted into the intermediate frequency by the frequency mixer;
an IF stage bandpass filter for bandwidth-limiting the intermediate frequency supplied from the frequency mixer every carrier; and
a detecting means for detecting a level of the intermediate frequency whose bandwidth is limited.

5. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a plurality of frequency mixers for converting an output of the coupler into intermediate frequencies;
a plurality of local oscillators for switching a local oscillation frequency to be input into the frequency mixers;
a plurality of IF stage bandpass filters for bandwidth- limiting the intermediate frequencies supplied from the frequency mixers every carrier; and
a plurality of detecting means for detecting levels of the intermediate frequencies which are bandwidth- limited by the IF stage bandpass filters.

6. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a plurality of bandpass filters for bandwidth- limiting an output of the coupler every carrier;
a high frequency switch for switching outputs of the bandpass filters selectively; and
a detecting means for detecting a level of the carrier which is selected selectively by the high frequency switch.

7. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a plurality of frequency mixers for converting an output of the coupler into intermediate frequencies every carrier;
a plurality of local oscillators for generating local oscillation frequencies to be input into the frequency mixers;
a high frequency switch for switching outputs of the frequency mixers selectively;
an IF stage bandpass filter for bandwidth-limiting the intermediate frequency of each carrier which is selectively switched by the high frequency switch; and
a detecting means for detecting a level of the carrier which is bandwidth-limited by the IF stage bandpass filter.

8. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a plurality of frequency mixers for converting an output of the coupler into intermediate frequencies;
a plurality of local oscillators for generating local oscillation frequencies to be input into the frequency mixers;
a plurality of IF stage bandpass filters for bandwidth- limiting the intermediate frequencies supplied from the frequency mixers every carrier;
a high frequency switch for switching selectively the intermediate frequencies of respective carriers which are bandwidth-limited by the IF stage bandpass filters; and
a detecting means for detecting a level of the carrier which is switched selectively by the high frequency switch.

9. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a frequency mixer for converting an output of the coupler into an intermediate frequency;
a local oscillator for generating one local oscillation frequency;
a plurality of IF stage bandpass filters for bandwidth- limiting the intermediate frequency every carrier;
a high frequency switch for switching selectively intermediate frequencies of respective carriers which are bandwidth-limited by the IF stage bandpass filters; and
a detecting means for detecting a level of the intermediate frequency of the carrier which is switched selectively by the high frequency switch.

10. A multi-carrier transmitting system comprising:
a plurality of transmitter circuits for generating carriers;
a synthesizer for synthesizing a plurality of carriers supplied from the plurality of transmitter circuits;
a common amplifier for amplifying commonly an output of the synthesizer;
a coupler for picking up a part of an output of the common amplifier;
a plurality of frequency mixers for converting an output of the coupler into intermediate frequencies;
a plurality of local oscillators for switching local oscillation frequencies that enable the frequency mixers to convert carriers of a multi-carrier into the intermediate frequencies;
a plurality of IF stage bandpass filters for bandwidth- limiting the intermediate frequencies supplied from the frequency mixers every carrier;
a high frequency switch for switching selectively intermediate frequencies which are bandwidth-limited by the IF stage bandpass filters; and
a detecting means for detecting a level of the intermediate frequency of the carrier which is switched selectively by the high frequency switch.

11. A multi-carrier transmitting system according to claim 1, 2 or 5, wherein an analog switch for switching selectively levels detected by the detecting means is arranged at an output stage of the detecting means.

12. A multi-carrier transmitting system according to any one of claims 1 to 10, further comprising:
variable gain amplifiers arranged between the transmitter circuits and the synthesizer to gain-control carriers from the transmitter circuits; and
a control circuit for controlling gains of the variable gain amplifiers based on an output level detected by the detecting means.

13. A multi-carrier transmitting system according to any one of claims 1 to 10, further comprising:
a control circuit for presuming environmental conditions of carries in the multi-carrier except one carrier based on an output level of one carrier in the multi-carrier, that is detected by the detecting means.

14. A multi-carrier transmitting system according to claim 13, further comprising:
variable gain amplifiers arranged between the transmitter circuits and the synthesizer to gain-control carriers from the transmitter circuits; and
a control circuit for controlling gains of the variable gain amplifiers for the carriers except one carrier based on an output level of one carrier in the multi-carrier, that is detected by the detecting means.

15. The built-in multi-carrier transmitting system used for a radio base station equipment in any one of claims 1 to 10, wherein:
an antenna which transmits or outputs the output of the coupler is provided in the multi-carrier transmitting system.

16. A radio communication system according to claim 15, further comprising:
a mobile radio unit connected mutually to the radio base station equipment by using a radio wave having a same frequency.
